# EUROPEAN PATENT APPLICATION

(11) **EP 1 722 550 A1**
(43) Date of publication of application: **15.11.2006**
(21) Application number: 05710623.9
(22) Date of filing: 17.02.2005
(51) Int. Cl.: H04N 1/46, G06T 1/00, G06T 3/40, H04N 1/60

(54) **COLOR MATCHING SYSTEM AND DISPLAY**

(30) Priority: 17.02.2004 JP 2004039534
(71) Applicant: SEIKO EPSON CORPORATION, Shinjuku-ku, Tokyo 163-0811 (JP)
(72) Inventor: KURUMISAWA, Takashi, c/o SEIKO EPSON CORPORATION, Suwa-Shi, Nagano 3928502 (JP); KOMAGAMINE, Katsumi, Matsumoto-shi, Nagano 3998707 (JP); ISHIDA, Masanori, Matsumoto-shi, Nagano 3998707 (JP)
(74) Representative: Cloughley, Peter Andrew
(86) International application number: PCT/JP2005/002972
(87) International publication number: WO 2005/079055

(57) **Abstract**

A color matching system is mounted on, for example, an image display device, and performs color conversion adapted to color characteristics of a display device. A graphics interface such as a GDI generates image creating commands for image data generated according to the operation of an application, and the display image data is generated based on the image creating commands. The display image data is supplied to the display device after the display image data has been subjected to the color conversion by the color management module and the color space adjustment has been performed in accordance with a color attribute file representing the color characteristics of the display device. This allows the display image data adapted to the color reproducibility of the display device to be displayed on the display device. Since the color conversion processing for color matching is performed by not an application side but the color management at a hardware-dependent portion such as an OS, a proper color matching is achieved without requiring any intervention from the application side.

## Description

### Technical Field

The present invention relates to a color matching system for displaying image data adapted to color characteristics of a display device.

### Background Art

Color matching systems for correcting images of various sources with color characteristics adapted to color spaces of a display device have been known. A general color matching system performs color conversion among display devices by the use of a color matching structure of an operating system (OS) by an application using an ICC (international color consortium) profile. The ICC profile includes 3 x3 matrices or three-dimensional tables, four-dimensional tables, etc., which define the relationship between a standard color space, such as a CIE L*a*b* color system and a CIE XYZ color system, and a device color (RGB or CMYK, for example). On this account, as the implementation of the color matching system is affected by the application itself, it is necessary for application developers to have sufficient knowledge of color matching. In addition, the ICC profile of a monitor, etc. is required to be registered by user in a default site through the control of the OS. However, since the setting method of the ICC profile is different in each OS, the number of users who can implement the color matching is limited.

On the other hand, since built-in devices that are installed with color liquid crystal panels, which is a key element in mobile phones, are distributed as finished products, the color matching structure of a high level is not frequently required when the built-in devices reproduce color. However, recently, in addition to realizing an accurate color reproducibility of images by the built-in display devices such as mobile phones being installed with cameras, it also becomes necessary to reproduce color accurately in other mobile phones, other display devices such as personal computers (PC) or printers on a network. Thus, other than the techniques for reproducing color in the built-in devices, there is also a prevalent need for techniques for reproducing color by a color matching based on a more general ICC profile.

The present invention is made in consideration of the above points, and it is an object of the present invention to provide a color matching system which enables reliably color-matched image data to be displayed on a display device without effort to perform the color matching on applications.

### Disclosure of Invention

According to one aspect of the present invention, a color matching system includes a graphics interface for generating image creating commands based on instructions from an application; and a color management module for performing color conversion on display image data based on predetermined color conversion reference data, wherein the color management module includes: a color management module driver for performing the color conversion on the display image data; and a color management module entry for performing an interface processing between the color management module driver and a display driver.

The color matching system is mounted on, for example, an image display device, and performs color conversion adapted to color characteristics of a display device. The graphics interface such as a GDI generates image creating commands for image data generated according to the operation of an application, and the display image data is generated based on the image creating commands. After the color conversion on the display image data is performed by the color management module, color space adjustment is performed in accordance with a color attribute file representing the color characteristics of the display device, and then the display image data is supplied to the display device. The color management module includes the color management module driver for performing the color conversion on the display image data and the color management module entry for performing the interface processing between the color management module driver and the display driver. This allows the display image data adapted to the color reproducibility of the display device to be displayed on the display device. Since the color conversion processing for color matching is performed by not an application side but the color management module at a hardware-dependent portion side such as an OS, a proper color matching is achieved without requiring any intervention from the application side.

In an aspect of the color matching system, the color matching system may further comprise the display driver which generates the display image data in accordance with the image creating commands, processes the display image data in accordance with the color attribute file corresponding to an output device after the display image data has been subjected to the color conversion by the color management module, and supplies the processed display image data to the display device as output image data.

In another aspect of the color matching system, the graphics interface and the color management module perform processing with reference to a predetermined single standard color space, and the color attribute file specifies the color characteristics of the display device for the predetermined single standard color space. In this aspect, since the color matching processing is performed with reference to the predetermined single standard color space, it becomes unnecessary for the display driver to retain the ICC profile between the a plurality of standard color spaces and the display device.

In another aspect of the color matching system, the display driver has the color attribute file for each of a plurality of display devices. With this configuration, the color matching system can perform a proper color matching on the plurality of display devices even when the color matching system is used in combination with different display devices.

In another aspect of the color matching system, when the image creating commands instruct enlargement of the display image data, the display driver performs an enlargement processing on the display image data after the display image data has been subjected to the color conversion by the color management module. In this aspect, when the enlargement processing follows the display of image, a processing speed can be enhanced by performing the color matching processing on the image data having a small size before the enlargement processing.

In another aspect of the color matching system, when the image creating commands instruct reduction of the display image data, the display driver performs the color conversion by the color management module on the display image data after reduction. In this aspect, when the reduction process follows the display of image, a process speed can be enhanced by performing the color matching processing on the image data having a small size after the reduction process.

In addition, the image display device may include the color matching system, a display panel, and a display controller for performing control for displaying the output image data on the display panel.

According to another aspect of the present invention, a color matching method includes an interface step of generating image creating commands based on instructions from an application; an image data generating step of generating the display image data in accordance with the image creating commands; a color managing step of performing color conversion on the display image data based on predetermined color conversion reference data; and an output step of processing the display image data in accordance with a color attribute file corresponding to an output device after the display image data has been subjected to the color conversion in the color managing step; and supplying the processed display image data to a display device as output image data.

In the same way as the above-mentioned color matching system, according to this color matching method, a graphics interface such as GDI generates the image creating commands for image data generated according to the operation of application, and the display image data is generated based on the image creating commands. The display image data is supplied onto the display device after the display image data has been subjected to the color conversion by the color management module and the color space adjustment has been performed based on a color attribute file representing the color characteristics of the display device. This allows the display image data adapted to the color reproducibility of the display device to be displayed on the display device. Since the color conversion processing for color matching is performed by not an application side but the color management at a hardware-dependent portion such as an OS, a proper color matching is performed without requiring any intervention from the application side.

According to yet another aspect of the present invention, a color matching program is characterized by making a computer function as: a graphics interface for generating image creating commands based on instructions from an application; a color management module for performing color conversion on display image data based on predetermined color conversion reference data; and a display driver for generating the display image data in accordance with the image creating commands, processing the display image data in accordance with a color attribute file corresponding to an output device after the display image data has been subjected to the color conversion by the color management module, and supplying the processed display image data to a display device as output image data.

The above-described color matching system can be implemented by executing this color matching program on the computer.

### Brief Description of the Drawings

Fig. 1 is a block diagram showing the schematic configuration of an image display device to which the present invention is applied.
Fig. 2 is a block diagram showing the software configuration of an image processing unit.
Fig. 3 is a flow chart of a display processing including a color matching processing.
Fig. 4 is a flow chart of an example of display processing including enlargement or reduction of images.
Best Mode for Carrying Out the Invention

Hereinafter, the best embodiment of the present invention will be described with reference to the drawings.

### [Image display device]

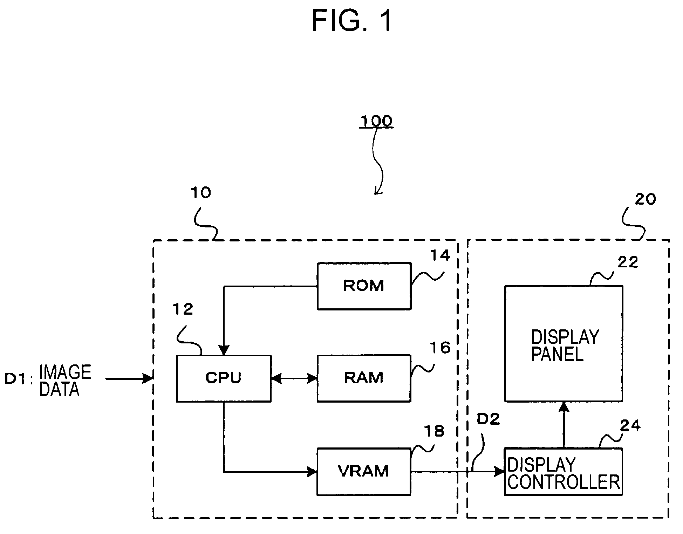

Fig. 1 shows a schematic configuration of an image display device 100 to which a color matching system of the present invention is applied. As the display device 100, a terminal device with a display device, such as a mobile phone or a PDA may be used. However, it is to be understood that the application of the present invention is not limited thereto.

The image display device 100 generally includes an image processing unit 10 and a display unit 20. The image processing unit 10 performs color matching processing on image data D1 supplied externally, or image data stored therein, to thereby generate display image data D2 to be supplied to the display unit 20. More specifically, the image processing unit 10 includes a CPU 12, a ROM 14, a RAM 16, and a VRAM 18.

OS for undertaking a basic control of the image processing unit 10, various application programs, etc., are stored in the ROM 14. Various application softwares, image data, etc., are stored in the RAM 16. In addition, a portion of the RAM 16 can be used as a working memory for a color matching processing by the image processing unit 10. The VRAM 18 is an image memory in which the display image data D2 after the color matching processing is performed by the image processing unit 10 is stored. The CPU 12 performs various processing and controls including the color matching processing, which will be described in detail later, by executing the OS or application programs which are stored in the ROM 14.

On the other hand, the display unit 20 displays the display image data D2 supplied from the image processing unit 10 on a display panel 22. The display panel 22 may include a liquid crystal panel, for example, but is not limited thereto. A display controller 24 generates a driving signal of pixels of the display panel 22 based on the display image data D2, and supplies the driving signals to the display panel 22 to thereby drive the display panel 22. By this, an image corresponding to the display image data D2 supplied from the image processing unit 10 is displayed on the display panel 22.

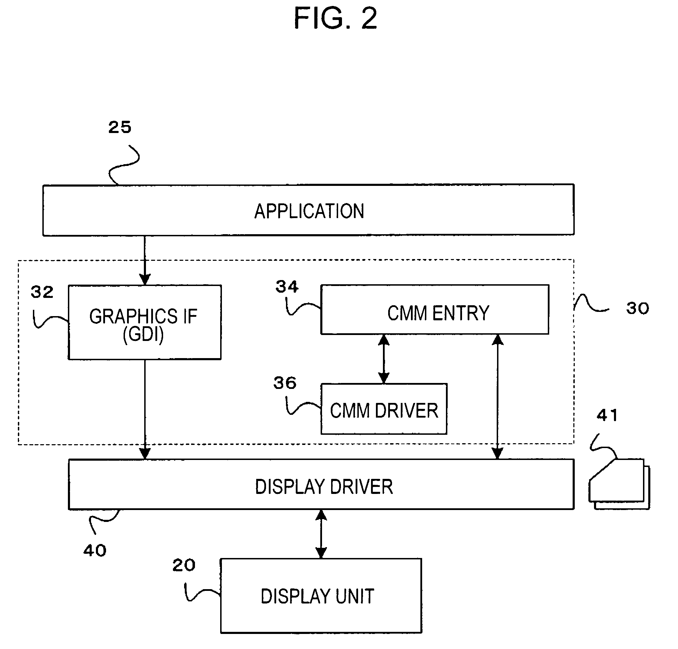

Fig. 2 shows the software configuration of the image processing unit 10. The image processing unit 10 mainly includes an OS 30, an application 25, and a display driver 40 as its software configuration. These components are realized when the CPU 14 shown in Fig. 1 executes the OS or the applications which are stored in the ROM 14 or the RAM 16. Specifically, the application 25 is configured when the CPU 12 executes the application programs. The OS 30 includes a graphics device interface (hereinafter, referred to as 'GDI') 32, a color management module (hereinafter, referred to as 'CMM: Color Management Module') entry 34, and a color management module (CMM) driver 36. The CMM entry 34 and the CMM driver 36 constitute a color management module (CMM).

The GDI 32 is software for controlling an output device such as a display device or a printer for image display. Specifically, the GDI 32 generates image creating commands based on an output from the application 25 and supplies the commands to the display driver 40. The display driver 40 generates display image data based on the image creating commands.

The CMM composed of the CMM entry 34 and the CMM driver 36 performs color management of the display image data in response to the image creating commands generated by the GDI 32. The CMM driver 36 holds color conversion standard data in one standard color space such as a sRGB space in the form of, for example, a 3-dimensional look table (LUT), and performs color conversion on the display image data supplied from the display driver 40 based on the color conversion standard data. The CMM entry 34 performs adjustment of data format between the display driver 40 and the CMM driver 36 and other interface processes. That is, the display image data output from the display driver 40 is supplied to the CMM driver 36 via the CMM entry 34. The CMM driver 36 performs the color conversion process required for the display image data and sends the color-converted display image data to the display driver 40 via the CMM entry 34.

The display driver 40 retains an ICC profile 41 which is a color attribute file according to color characteristics of the display panel 22 of the display unit 20. The ICC profile 41 is a file for describing color attribute for each display device of the display panel and is prepared for each display panel. The display driver 40 performs the color conversion process and other processes for adapting the display image data on which a required color conversion process was performed by the CMM to the color characteristic of the display panel 22 using the ICC profile 41 corresponding to the display unit 20, and supplies the color-converted display image data to the display unit 20. That is, the display driver 40 performs a process for adapting the display image data to the color characteristics of the display unit 20 which is an output device, based on the ICC profile 41.

The display driver 40 can retain the ICC profile 41 for a plurality of display devices. That is, it can retain a plurality of ICC profiles corresponding to a plurality of display panels having different color characteristics, respectively. By doing so, the image processing unit 10 can reproduce the color correctly as long as it uses the display panel 22 having a corresponding ICC profile retained in the display driver 40. That is, the image processing unit 10 can reproduce the color correctly even when different display units 20 having different color characteristics are combined each other.

In the above configuration, the OS 30 and the display driver 40 are configured to perform processing in a single standard color space (for example, sRGB). That is, the GDI 32 receives an sRGB image from the application. At this time, if an image treated by the application 25 is an sRGB image, the application 25 may supply the sRGB image as it is to the GDI 32. On the other hand, if the image treated by the application 25 is an image in a color space other than the sRGB, the application (or middleware and so on) may perform color matching to the color space on the image and supply the color-matched image to the GDI 32.

Within the OS 30, the color management by the CMM is all performed on the sRGB. That is, the CMM driver 36 performs color conversion processing for the color matching on the sRGB and supplies the color-converted display image data to the display driver 40. In this way, since the color management process within the OS 30 is performed on only the single standard color space, it is possible for the display driver 40 to retain only the ICC profile defining the relationship between the single standard color space and a color space of a display device. Accordingly, there is an advantage in that there is no need to hold ICC profiles for a plurality of standard color spaces for individual display devices.

Incidentally, the display driver 40 may be a software driver, or a hardware driver using an accelerator and so on.

### [Color matching processing]

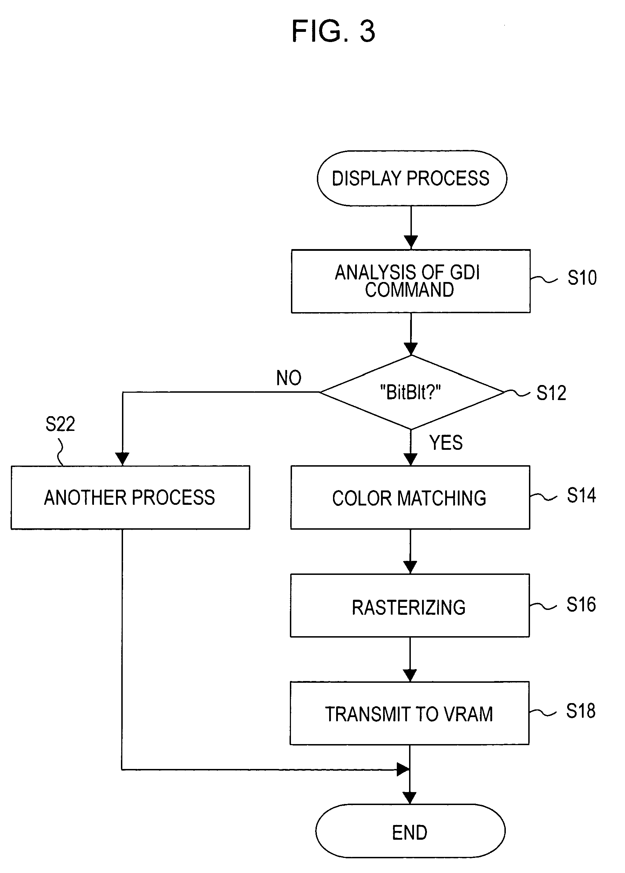

Next, an embodiment of an image processing including the color matching according to the present invention will be described. Fig. 3 shows a flow chart of an image processing. The processing shown in Fig. 3 is basically executed by the display driver and the CMM shown in Fig. 2. Hereinafter, a case where a GDI command supplied from the GDI 32 is "BitBlt" will be described by way of an example. However, other commands will be processed in the same procedure as the GDI command.

To begin with, image data is transmitted from the application 25 to the GDI 32, and then the GDI 32 generates a GDI command to be supplied to the display driver 40. The display driver 40 receives and analyzes the GDI command (Step S10) and determines whether the GDI command is "BitBlt" or not (Step S12). Here, the GDI command "BitBlt" is a command having an argument of, for example,
BitBlt(Bitmap, X1, Y1, X2, Y2)
which is referred to as a command for arranging bitmap data which is specified as Bitmap on a region defined by variables X1, Y1, X2, and Y2.

If the GDI command is "BitBlt" (Step S2: Yes), the display driver 40 supplies the generated display image data to the CMM driver 36 via the CMM entry 34 to perform the color conversion for color matching (Step S14). Next, the display driver 40 rasterizes the color-converted display image data in order to expand it as raster data (Step S16), and then transmits the raster data to the VRAM 18 (Step S18).

On the other hand, if the GDI command is not "BitBlt" (Step S12: No), the display driver 40 basically performs processing on other GDI commands in the same way as in the above process. Then, the image processing is ended.

In this way, the display image data (raster data) transmitted to the VRAM 18 is transmitted to the display unit 20 and is displayed on the display panel 22 under the control of the display controller 24.

Also, the rasterizing in Step S16 is performed by a software process if the display driver 40 is a software driver and by a hardware process if the display driver 40 is a hardware driver. Here, in the color matching processing of the present invention, since the color matching is performed on only the image data before the image data is rasterized and transmitted to the VRAM, the same processing result can be obtained regardless of whether a rasterizing processing after that is a hardware processing or a software processing. Particularly, in the image display device 100 of the present invention, when the color matching is performed on image data such as a photographic image or an illustration and then the image data is displayed on the display panel, the display driver 40 and the CMM perform the color matching processing on only the image data transmitted from the application according to the above flow chart, whereby accurate display image data adapted to the color space of the display panel can be obtained.

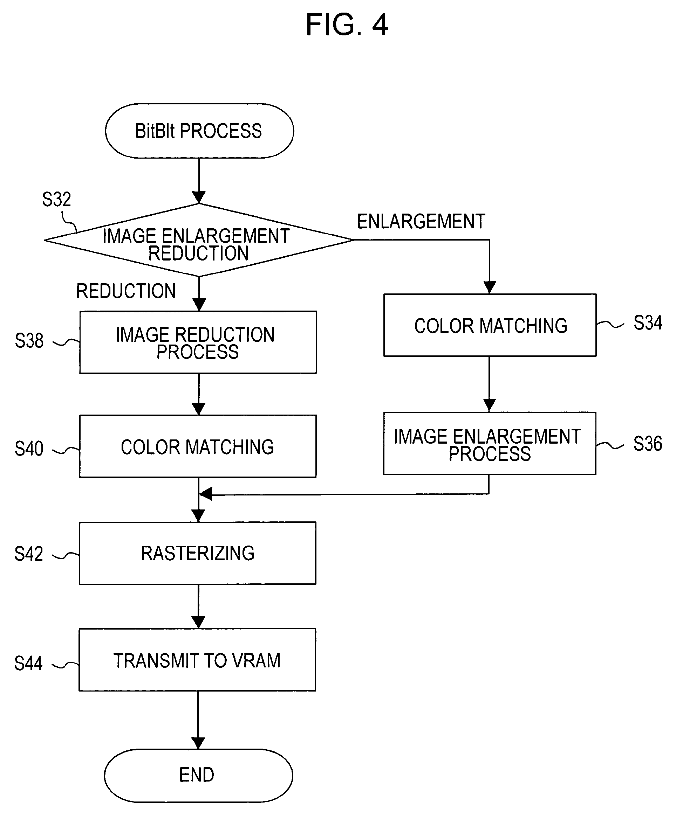

Next, an embodiment of a display processing including enlargement or reduction of the image data will be described. Fig. 4 shows a flow chart of a "BitBlt" processing including the enlargement or reduction of the image data. This process is basically executed by the display driver 40 and the CMM in the same way as the processing shown in Fig. 3.

There is a case where the size of a source image is enlarged or reduced to a specified size until the source image is finally rasterized as a BitBlt command and the rasterized image is transmitted to the VRAM. In the following example of the enlargement or reduction of the image in order to enhance a processing speed of the color matching, a color matching processing is performed in a step where image data has a small size.

To begin with, the display driver 40 receives the GDI command "BitBlt" from the GDI 32 and determines whether the image must be enlarged based on the command (Step S32). If it is determined that the image must be enlarged, the CMM composed of the CMM entry 34 and the CMM driver 36 performs color conversion for color matching on the image data before enlargement (Step S34). Then, the display driver 40 enlarges the color-converted image data (Step S36), rasterizes the enlarged image data (Step S42), and transmits the rasterized image data to the VRAM 18 (Step S44).

On the other hand, if it is determined that the image must be reduced, the display driver 40 first performs reduction of the image before color matching (Step S38). Then, the CMM performs color conversion for color matching on the reduced image data (Step S40). Thereafter, the display driver 40 rasterizes the color-converted image data (Step S42) and transmits the rasterized image data to the VRAM 18 (Step S44).

In this way, if there is a case where the image data must be enlarged or reduced, by performing the color matching on the image data in the step where the image data has a small size, load of the color matching processing is alleviated, and accordingly, the image processing can be quickly performed. Such processing becomes feasible by performing the color matching processing through the CMM or the display driver at the OS side, using the configuration of the present invention shown in Fig. 2, instead of the application side.

The enlargement or reduction of the image data is performed, for example, in a case where image data having a certain size is displayed on a display device having a different display size or a case where image data is first displayed on a display device having a certain display size and then the displayed image data is enlarged or reduced if necessary.

As described above, in the color matching processing of the present invention, since the color matching adapted to the color reproducibility space of the display device is performed in the hardware-dependent portion (OS side) for controlling devices instead of the application side, it is possible to perform a proper color matching without any intervention by the application developers or users of display devices. Incidentally, the color matching processing is not frequently performed for creations of lines, characters, and rectangular shapes, or a faint out command, etc. on applications, unlike the image data such as a natural picture. However, according to the color matching processing of the present invention, since creating colors for them are specified via the GDI, it is possible to provide good color reproducibility to the display device.

Incidentally, the color matching processing according to the present invention is applicable to various image data including images from input devices (for example, CCD camera), images from output device (for example, LCD), contents (images from external information providers), images photographed by digital cameras, etc.

## Claims

1. A color matching system comprising:
a graphics interface for generating image creating commands based on instructions from an application; and
a color management module for performing color conversion on display image data based on predetermined color conversion reference data,
wherein the color management module includes:
a color management module driver for performing the color conversion on the display image data; and
a color management module entry for performing an interface processing between the color management module driver and a display driver.

2. The color matching system according to Claim 1, further comprising the display driver for generating the display image data based on the image creating commands, processing the display image data based on a color attribute file corresponding to an output device after the display image data has been subjected to the color conversion by the color management module, and supplying the processed display image data to a display device as output image data.

3. The color matching system according to Claim 1 or Claim 2, wherein the graphics interface and the color management module perform processing based on a predetermined single standard color space, and the color attribute file specifies color characteristics of the display device for the predetermined single standard color space.

4. The color matching system according to Claim 3, wherein the display driver has the color attribute file for each of a plurality of display devices.

5. The color matching system according to any one of Claims 1 to 4, wherein, when the image creating commands instruct enlargement of the display image data, the display driver performs an enlargement processing on the display image data after the display image data has been subjected to the color conversion by the color management module.

6. The color matching system according to any one of Claims 1 to 5, wherein, when the image creating commands instruct reduction of the display image data, the display driver performs the color conversion by the color management module on the display image data after reduction.

7. An image display device comprising:
the color matching system according to any one of Claims 1 to 6;
a display panel; and
a display controller for performing control for displaying the output image data on the display panel.

8. A color matching method comprising:
an interface step of generating image creating commands based on instructions from an application;
an image data generating step of generating the display image data in accordance with the image creating commands;
a color managing step of performing color conversion on the display image data based on predetermined color conversion reference data; and
an output step of processing the display image data in accordance with a color attribute file corresponding to an output device after the display image data has been subjected to the color conversion in the color managing step; and supplying the processed display image data to a display device as output image data.

9. A color matching program **characterized by** making a computer to function as:
a graphics interface for generating image creating commands based on instructions from an application;
a color management module for performing color conversion on display image data based on predetermined color conversion reference data; and
a display driver for generating the display image data in accordance with the image creating commands, processing the display image data in accordance with a color attribute file corresponding to an output device after the display image data has been subjected to the color conversion by the color management module, and supplying the processed display image data to a display device as output image data.
